# EUROPEAN PATENT APPLICATION

(11) **EP 4 236 470 A1**
(43) Date of publication of application: **30.08.2023**
(21) Application number: 21881962.1
(22) Date of filing: 18.10.2021
(51) Int. Cl.: H04W 40/22

(54) **METHOD AND APPARATUS FOR MULTIPLEXING RELAY LINK, RELAY DEVICE, COMMUNICATION DEVICES, AND MEDIUM**

(30) Priority: 22.10.2020 CN 202011141023
(71) Applicant: Vivo Mobile Communication Co., Ltd., Dongguan, Guangdong 523863 (CN)
(72) Inventor: WANG, Wen, Dongguan, Guangdong 523863 (CN); ZHENG, Qian, Dongguan, Guangdong 523863 (CN); LIU, Jiamin, Dongguan, Guangdong 523863 (CN)
(74) Representative: Murgitroyd & Company
(86) International application number: PCT/CN2021/124440
(87) International publication number: WO 2022/083546

(57) **Abstract**

Embodiments of this application provide a multiplexing method and a multiplexing apparatus for a sidelink, a relay device, a communication device, and a medium. The multiplexing method for a sidelink includes: receiving, by a relay device, a first communication request for communicating with a second communication device from a first communication device, and obtaining a first data link layer identifier of an established first sidelink of the second communication device; and establishing, by the relay device, a second sidelink between the first communication device and the second communication device according to the first data link layer identifier.

## Description

### CROSS-REFERENCE TO RELATED APPLICATION

This application claims priority to Chinese Patent Application No. 202011141023.6, entitled "MULTIPLEXING METHOD AND APPARATUS FOR SIDELINK, RELAY DEVICE, COMMUNICATION DEVICE, AND MEDIUM" filed with the China National Intellectual Property Administration on October 22, 2020, which is incorporated herein by reference in its entirety.

### TECHNICAL FIELD

This application relates to the field of communication technologies, and specifically, to a multiplexing method for a sidelink, a multiplexing apparatus for a sidelink, a relay device, a communication device, and a readable storage medium.

### BACKGROUND

In the fifth generation (the fifth generation, 5G) mobile communication technology, as a large quantity of devices is connected to a cellular network, pressure on a core network increases sharply. The third generation partnership project (3GPP) proposes device-to-device communication (Device-to-Device, D2D) to serve a close-range scenario. The D2D communication technology refers to a communication manner in which two peer user nodes communicate directly. In a decentralized network including D2D communication users, each user node may transmit and receive signals, and has a function of automatic routing.

User equipment (User Equipment, UE) with a limited power may communicate with a radio access network device through a relay device (relay UE), thereby reducing power consumption of the user equipment, and simultaneously improving reduction of a signal-to-noise ratio and degradation of quality of service caused by channel fading and the device being too far away. A link between user equipments is referred to as a sidelink (sidelink). However, for relay communication, how to implement sidelink multiplexing established by a plurality of user equipments to a same target device (target UE) through the relay device is an urgent problem to be resolved.

### SUMMARY

Embodiments of this application provide a multiplexing method and apparatus for a sidelink, a relay device, a communication device, and a medium, which may resolve a technical problem of how to perform sidelink multiplexing through a relay device when a plurality of user equipments need to establish communication with a same target device in the related art.

To resolve the foregoing problems, this application is implemented as follows:

According to a first aspect, the embodiments of this application provide a multiplexing method for a sidelink, including:
receiving, by a relay device, a first communication request for communicating with a second communication device from a first communication device;
obtaining, by the relay device, a first relay layer 2 identifier of an established first sidelink of the second communication device; and
establishing, by the relay device, a second sidelink between the first communication device and the second communication device according to the first relay layer 2 identifier, so that a link between the relay device of the second sidelink and the second communication device multiplexes a link between the relay device of the first sidelink and the second communication device.

According to a second aspect, the embodiments of this application provide a multiplexing method for a sidelink, including:
after receiving a multiplexing request carrying multiplexing negotiation information of a sidelink transmitted by a relay device, determining, by a second communication device, multiplexing information according to the multiplexing negotiation information; and
transmitting, by the second communication device, a multiplexing instruction carrying the multiplexing information to the relay device, where
the multiplexing information includes multiplexing acceptance information or multiplexing rejection information; and the multiplexing instruction includes any one of the following: a relay communication instruction, a link modification instruction, and PC5 signaling.

According to a third aspect, the embodiments of this application provide a multiplexing method for a sidelink, including:
determining, by a first communication device, a second communication device corresponding to the first communication device;
transmitting, by the first communication device, a first communication request for the first communication device to communicate with the second communication device to a relay device; and
receiving, by the first communication device, first communication acceptance information or second communication acceptance information fed back by the relay device, to complete connection establishment of a second sidelink between the first communication device and the second communication device.

According to a fourth aspect, the embodiments of this application provide a multiplexing apparatus for a sidelink, including:
a receiving module, configured to receive a first communication request for communicating with a second communication device from a first communication device;
an obtaining module, configured to obtain a first relay layer 2 identifier of an established first sidelink of the second communication device; and
an establishment module, configured to establish a second sidelink between the first communication device and the second communication device according to the first relay layer 2 identifier, so that a link between the relay device of the second sidelink and the second communication device multiplexes a link between the relay device of the first sidelink and the second communication device.

According to a fifth aspect, the embodiments of this application provide a multiplexing apparatus for a sidelink, including:
a receiving module, configured to receive a multiplexing request carrying multiplexing negotiation information of a sidelink transmitted by a relay device;
a determining module, configured to determine multiplexing information according to the multiplexing negotiation information; and
a transmitting module, configured to transmit a multiplexing instruction carrying the multiplexing information to the relay device, where
the multiplexing information includes multiplexing acceptance information or multiplexing rejection information; and the multiplexing instruction includes any one of the following: a relay communication instruction, a link modification instruction, and PC5 signaling.

According to a sixth aspect, the embodiments of this application provide a multiplexing apparatus for a sidelink, including:
a determining module, configured to determine a second communication device corresponding to the first communication device;
a transmitting module, configured to transmit a first communication request for the first communication device to communicate with the second communication device to a relay device; and
a receiving module, configured to receive first communication acceptance information or second communication acceptance information fed back by the relay device, to complete connection establishment of a second sidelink between the first communication device and the second communication device.

According to a seventh aspect, the embodiments of this application provide a relay device, including a processor, a memory, and a program or an instruction stored in the memory and executable on the processor, where when the program or the instruction is executed by the processor, steps of the multiplexing method for a sidelink according to the first aspect are implemented.

According to an eighth aspect, the embodiments of this application provide a communication device, including a processor, a memory, and a program or an instruction stored in the memory and executable on the processor, where when the program or the instruction is executed by the processor, steps of the multiplexing method for a sidelink according to the second aspect or the third aspect are implemented.

According to a ninth aspect, a readable storage medium is provided in the embodiments of this application, storing a program or an instruction, where when the program or the instruction is executed by a processor, steps of the multiplexing method for a sidelink according to the first aspect or the second aspect or the third aspect are implemented.

According to a tenth aspect, the embodiments of this application provide a chip, including a processor and a communication interface, where the communication interface is coupled to the processor, and the processor is configured to run a program or an instruction to implement steps of the multiplexing method for a sidelink according to the first aspect or the second aspect or the third aspect.

In this embodiment of this application, a relay device receives a first communication request for communicating with a second communication device from a first communication device, and obtains a first relay layer 2 identifier of an established first sidelink of the second communication device; and the relay device establishes a second sidelink between the first communication device and the second communication device according to the first relay layer 2 identifier, so that a link between the relay device of the second sidelink and the second communication device multiplexes a link between the relay device of the first sidelink and the second communication device. Therefore, in a process of relay communication performed by the first communication device, the first relay layer 2 identifier of the first sidelink that has established a connection with the second communication device is used, and a sidelink that is requested to be established is multiplexed to the existing first sidelink, thereby implementing multiplexing of sidelinks of a plurality of first communication devices, improving resource utilization and scheduling efficiency, reducing a bandwidth requirement for resource transmission, and simultaneously further effectively reducing operating costs.

### BRIEF DESCRIPTION OF THE DRAWINGS

FIG. 1 is a flowchart 1 of a multiplexing method for a sidelink according to an embodiment of this application.
FIG. 2 is a flowchart 2 of a multiplexing method for a sidelink according to an embodiment of this application.
FIG. 3 is a flowchart 3 of a multiplexing method for a sidelink according to an embodiment of this application.
FIG. 4 is a flowchart 4 of a multiplexing method for a sidelink according to an embodiment of this application.
FIG. 5 is a flowchart 5 of a multiplexing method for a sidelink according to an embodiment of this application.
FIG. 6 is a flowchart 6 of a multiplexing method for a sidelink according to an embodiment of this application.
FIG. 7 is a flowchart 7 of a multiplexing method for a sidelink according to an embodiment of this application.
FIG. 8 is a flowchart 8 of a multiplexing method for a sidelink according to an embodiment of this application.
FIG. 9 is a flowchart 9 of a multiplexing method for a sidelink according to an embodiment of this application.
FIG. 10 is a schematic diagram 1 of a relay device performing link multiplexing according to an embodiment of this application.
FIG. 11 is a schematic diagram 2 of a relay device performing link multiplexing according to an embodiment of this application.
FIG. 12 is a schematic diagram 3 of a relay device performing link multiplexing according to an embodiment of this application.
FIG. 13 is a schematic diagram of an operation among a relay device, a first communication device, and a second communication device in a wireless network according to an embodiment of this application.
FIG. 14 is a schematic diagram of a relay device not performing link multiplexing according to an embodiment of this application.
FIG. 15 is a structural block diagram 1 of a multiplexing apparatus for a sidelink according to an embodiment of this application.
FIG. 16 is a structural block diagram 2 of a multiplexing apparatus for a sidelink according to an embodiment of this application.
FIG. 17 is a flowchart 10 of a multiplexing method for a sidelink according to an embodiment of this application.
FIG. 18 is a flowchart 11 of a multiplexing method for a sidelink according to an embodiment of this application.
FIG. 19 is a flowchart 12 of a multiplexing method for a sidelink according to an embodiment of this application.
FIG. 20 is a structural block diagram 3 of a multiplexing apparatus for a sidelink according to an embodiment of this application.
FIG. 21 is a structural block diagram 4 of a multiplexing apparatus for a sidelink according to an embodiment of this application.
FIG. 22 is a flowchart 13 of a multiplexing method for a sidelink according to an embodiment of this application.
FIG. 23 is a structural block diagram 5 of a multiplexing apparatus for a sidelink according to an embodiment of this application.
FIG. 24 is a structural block diagram 1 of a relay device according to an embodiment of this application.
FIG. 25 is a structural block diagram of a communication device according to an embodiment of this application.
FIG. 26 is a structural block diagram 2 of a relay device according to an embodiment of this application.

### DETAILED DESCRIPTION

To better understand the foregoing objective, features, and advantages of this application, the following further describes this application in detail with reference to the accompanying drawings and specific implementations. It is to be noted that the embodiments in this application and features in the embodiments may be combined with each other in the case of no conflict.

Many specific details are set forth in the following description to facilitate a full understanding of this application, but this application may alternatively be implemented in other manners different from those described herein and therefore, a protection scope of this application is not limited by specific embodiments disclosed below.

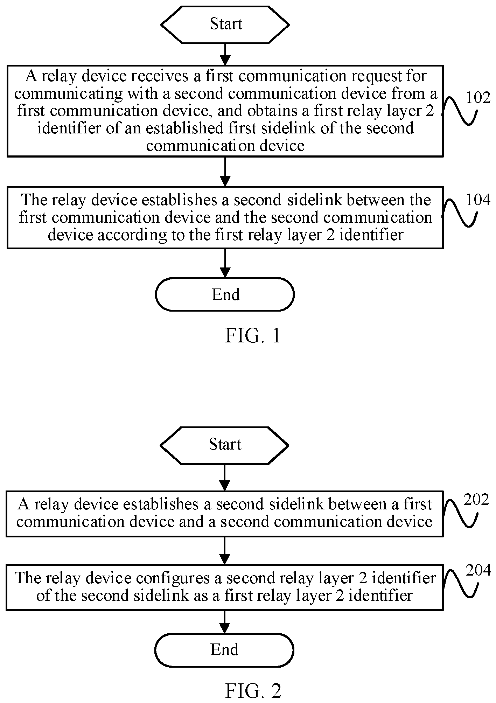

The following describes a multiplexing method for a sidelink, a multiplexing apparatus for a sidelink, a relay device, a communication device, and a readable storage medium according to some embodiments of this application with reference to FIG. 1 to FIG. 26.

In an embodiment of this application, FIG. 1 is a flowchart 1 of a multiplexing method for a sidelink according to an embodiment of this application, including the following steps 102 and 104.

Step 102: A relay device receives a first communication request for communicating with a second communication device from a first communication device, and obtains a first relay layer 2 identifier of an established first sidelink of the second communication device; and
in this embodiment, the first communication device (UE) transmits the first communication request to the relay device (relay UE), so as to establish a relay device ↔ of the first communication ↔ device and a second sidelink of the second communication device. The first communication request may carry user information (user info) of the second communication device (target UE), for example, an application layer identifier of a target device (target UE's Application layer ID). The relay device retrieves whether there is a second communication device in a currently established sidelink, that is, checks whether there is a first sidelink between another communication device and the second communication device except the first communication device in a communication range of the relay device. When the first sidelink is retrieved, a first relay layer 2 identifier configured by the relay device for the first sidelink is obtained.

The first communication device is user equipment at transmitting side that transmits the first communication request, and the second communication device is a requested target device at receiving side. A communication device includes but is not limited to a terminal, and the terminal includes but is not limited to a mobile communication device, a tablet computer, a computer, a notebook computer, a wearable device, a vehicle-mounted communication device, or the like.

Step 104: The relay device establishes a second sidelink between the first communication device and the second communication device according to the first relay layer 2 identifier.

It is to be noted that the first sidelink or the second sidelink includes two links, one of which is a link between the first communication device and the relay device, and the other is a link between the relay device and the second communication device.

In this embodiment, the first relay layer 2 identifier of the first sidelink that has established communication with the second communication device is used to establish a second sidelink between the first communication device and the second communication device, so that a link between the relay device of the second sidelink and the second communication device multiplexes a link between the relay device of the first sidelink and the second communication device. Therefore, a sidelink that is requested to be established is multiplexed to the existing first sidelink, thereby implementing multiplexing of sidelinks of a plurality of user equipments, improving resource utilization and scheduling efficiency, reducing a bandwidth requirement for resource transmission, and simultaneously further effectively reducing operating costs.

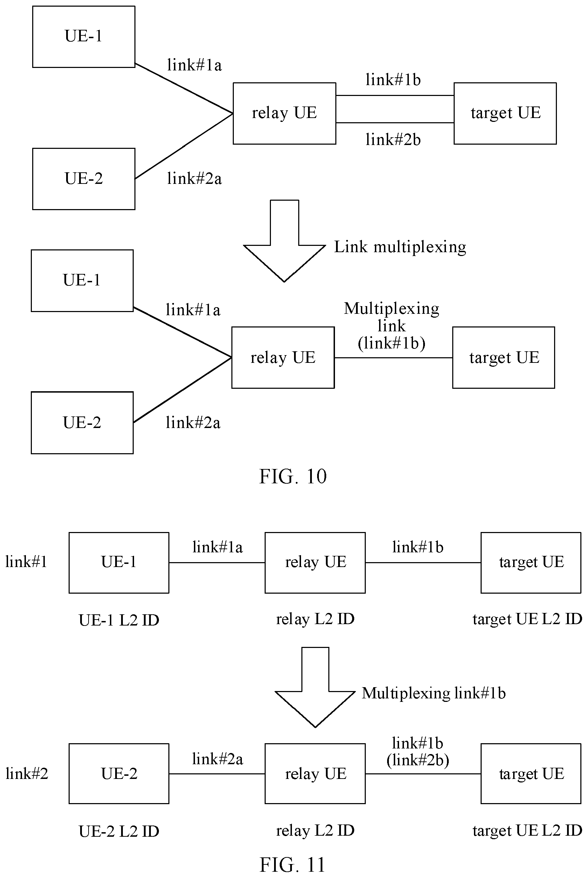

Specifically, for example, as shown in FIG. 10, user equipment UE-1 (a first communication device) establishes a sidelink with a target device target LTE (a second communication device) through a relay device relay UE, a link between the UE-1 and the relay UE is a link#1a, and a link between the relay UE and the target UE is a link#1b. User equipment UE-2 (a first communication device) establishes a sidelink with a target device target UE through a relay device relay UE, a link between the UE-2 and the relay UE is a link#2a, and a link between the relay UE and the target UE is a link#2b. When the relay UE performs link multiplexing, data or signaling on the link#2b may be multiplexed to the link#1b. That is, the UE-1 and the UE-2 share the link#1b.

In an embodiment of this application, for the step 104, a process in which the relay device establishes a second sidelink between the first communication device and the second communication device according to the first relay layer 2 identifier may include any one of the following manners.

Manner 1. FIG. 2 is a flowchart 2 of a multiplexing method for a sidelink according to an embodiment of this application, including:
step 202. The relay device establishes a second sidelink between the first communication device and the second communication device; and
step 204. The relay device configures a second relay layer 2 identifier of the second sidelink as the first relay layer 2 identifier.

In this embodiment, the relay device first establishes the second sidelink between the first communication device and the second communication device, and then multiplexes the first relay layer 2 identifier of the first sidelink, that is, the relay device ↔ of the first communication device ↔. The second relay layer 2 identifier of the second sidelink of the second communication device is the same as the first relay layer 2 identifier of the first sidelink. When transmitting data or signaling, the first communication device and the second communication device may share the link between the second communication device and the relay device in the established first sidelink, and then perform link multiplexing of the first sidelink, improving resource utilization and scheduling efficiency.

Specifically, for example, as shown in FIG. 11, user equipment UE-1 (a first communication device) establishes a sidelink link#1 (a first sidelink) with a target device target UE (a second communication device) through a relay device relay UE, a link between the UE-1 and the relay UE is a link#1a, and a link between the relay UE and the target UE is a link#1b. When the relay UE receives a link establishment request from the user equipment UE-2 (the first communication device), a request message may carry user information of the target UE, and the sidelink link#2 (the second sidelink) of UE-2 ↔ relay UE ↔ target UE is established. In this case, the relay UE multiplexes the relay L2 ID of the link#1, so that the relay UE may multiplex signaling or data of different source UEs (UE-1 and UE-2) to the link#1b.

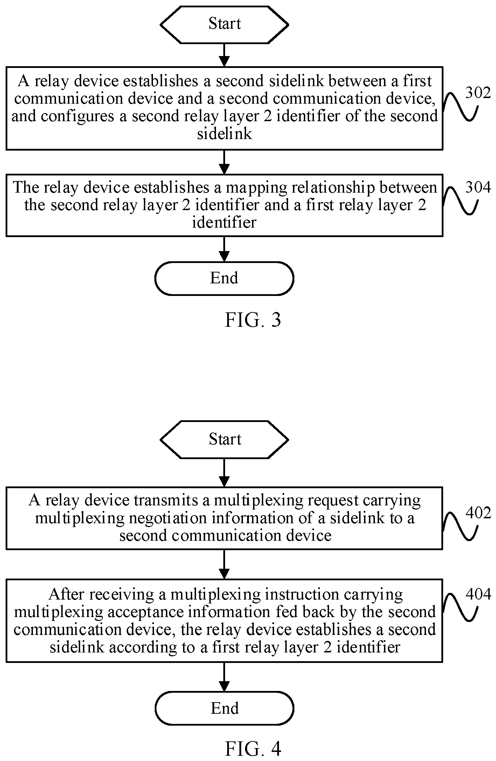

Manner 2. FIG. 3 is a flowchart 3 of a multiplexing method for a sidelink according to an embodiment of this application, including:
step 302. The relay device establishes a second sidelink between the first communication device and the second communication device, and configures a second relay layer 2 identifier of the second sidelink; and
in this embodiment, the relay device first establishes a second sidelink between the first communication device and the second communication device, and in this case, the relay device configures a new second relay layer 2 identifier for the second sidelink.
step 304. The relay device establishes a mapping relationship between the second relay layer 2 identifier and the first relay layer 2 identifier.

In this embodiment, the relay device establishes a mapping relationship between the second relay layer 2 identifier and the first relay layer 2 identifier. The relay device may multiplex the signaling or data of different source communication devices to the first sidelink according to the mapping relationship, and then perform link multiplexing of the first sidelink according to the mapping relationship, thereby improving resource utilization and scheduling efficiency.

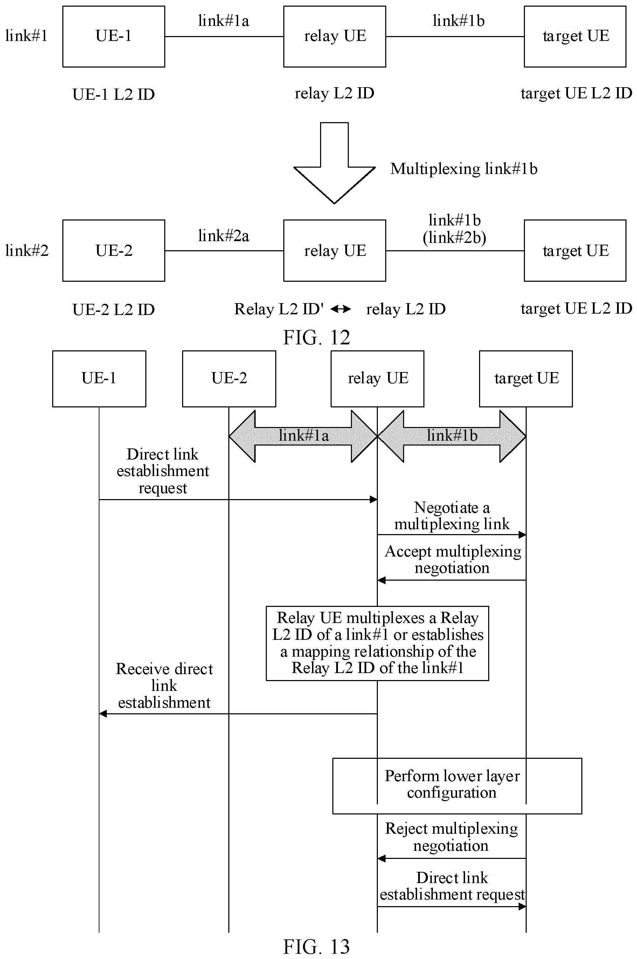

Specifically, for example, as shown in FIG. 12, user equipment UE-1 (a first communication device) establishes a sidelink link#1 (a first sidelink) with a target device target UE (a second communication device) through a relay device relay UE, a link between the UE-1 and the relay UE is a link#1a, and a link between the relay UE and the target UE is a link#1b. When the LTE-2 (the first communication device) establishes a requirement for establishing a relay connection with the target UE through the relay UE, the request message may carry the user information of the target UE, and the relay UE determines to multiplex the link#1b of the link#1. That is, the relay LTE and the target LTE are in a relay connection manner, and the sidelink link#2 (the second sidelink) of UE-2 ↔ relay UE ↔ target LTE is established. The relay LTE allocates a new relay L2 ID' (a relay layer 2 identifier) for the link#2, and the relay LTE establishes a mapping relationship between the relay L2 ID' of the link#2 and the relay L2 ID of the link#1. When receiving the data or signaling transmitted by the UE-2 to the target UE, although the relay L2 ID' is used, the relay UE may learn the relay L2 ID of the link#1 according to the mapping relationship, and then complete link multiplexing of data or signaling on the link#1b, so that transmission on a plurality of paths is simultaneously performed on one physical channel.

In an embodiment of this application, before step 104, FIG. 4 is a flowchart 4 of a multiplexing method for a sidelink according to an embodiment of this application, including:
step 402. The relay device transmits a multiplexing request carrying multiplexing negotiation information of the sidelink to the second communication device; and
the multiplexing request includes any one of the following: a first communication request, a link modification request (link modification request), and PC5 signaling (a PC5 interface is an interface between user equipments). The multiplexing negotiation information is used for requesting whether the second communication device performs multiplexing, by the second sidelink, on the first sidelink, and the multiplexing negotiation information uses or carries the first relay layer 2 identifier. That is, the first relay layer 2 identifier is used as a header or a data frame of a data frame of the multiplexing negotiation information. The multiplexing negotiation information includes at least one of the following: user information of the first communication device (UE user info), user information of the relay device (relay UE user info), user information of the second communication device (target LTE user info), quality of service information (QoS info), a service type, and a logical channel identifier (logical channel identifier, LCID).
step 404. After receiving a multiplexing instruction carrying multiplexing acceptance information fed back by the second communication device, the relay device establishes the second sidelink according to the first relay layer 2 identifier.

It is confirmed that the multiplexing acceptance information includes at least one of the following: user information of the second communication device (target UE user info), quality of service information (QoS info), and a service type.

In this embodiment, when the relay device retrieves that there is a first sidelink of the second communication device in the established sidelink, that is, there is a sidelink that may be multiplexed, a multiplexing request carrying the link multiplexing negotiation information is transmitted to the second communication device, to query whether the second communication device performs link multiplexing. If the second communication device accepts link multiplexing, then the second communication device replies a multiplexing instruction carrying the multiplexing acceptance information to the relay device. After receiving a multiplexing instruction fed back by the second communication device, the relay device confirms that a link multiplexing operation is performed, and establishes a second sidelink between the first communication device and the second communication device according to the first relay layer 2 identifier.

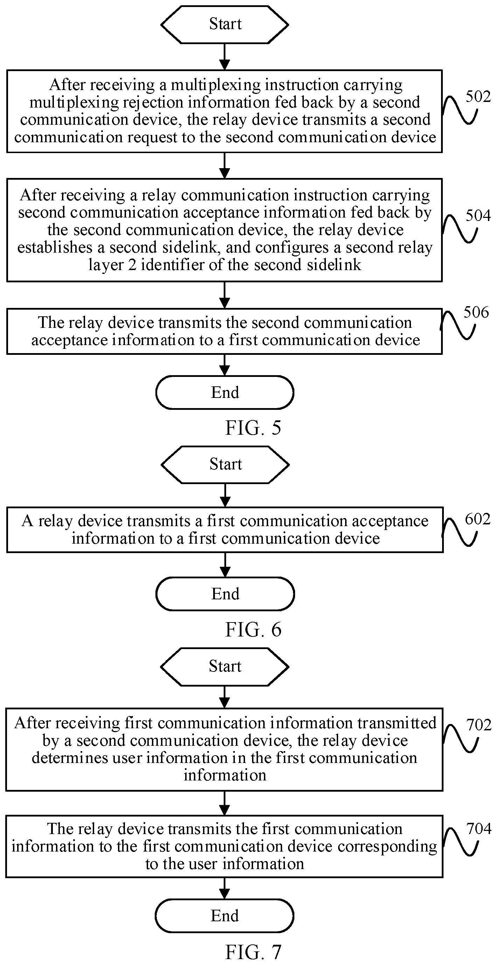

In an embodiment of this application, after step 402, FIG. 5 is a flowchart 5 of a multiplexing method for a sidelink according to an embodiment of this application, including:
step 502. After receiving a multiplexing instruction carrying multiplexing rejection information fed back by the second communication device, the relay device transmits a second communication request to the second communication device; and
in this embodiment, after confirming that there is a sidelink that may be multiplexed in the established sidelink, the relay device transmits the multiplexing negotiation information of the first communication device to the second communication device, to query whether to perform link multiplexing. If the second communication device rejects link multiplexing, the second communication device replies a multiplexing instruction carrying the multiplexing rejection information to the relay device. After the relay device receives the multiplexing instruction, the relay device no longer performs a multiplexing principle, and transmits the second communication request of the first communication device to the second communication device, to query whether the second communication device accepts the first communication device to establish a second sidelink with the second communication device through the relay device.
step 504. After receiving a relay communication instruction carrying second communication acceptance information fed back by the second communication device, the relay device establishes the second sidelink, and configures a second relay layer 2 identifier of the second sidelink; and
step 506. The relay device transmits the second communication acceptance information to the first communication device.

In this embodiment, after the relay device receives the multiplexing rejection instruction fed back by the second communication device, the relay device transmits the second communication request of the first communication device to the second communication device, to query whether the second communication device accepts the first communication device to establish a second sidelink with the second communication device through the relay device. If the second communication device confirms to perform communication, the second communication device replies the relay communication instruction carrying the second communication acceptance information to the relay device. After the relay device receives the relay communication instruction, the relay device feeds back the second communication acceptance information to the first communication device, establishes an independent second sidelink, and simultaneously configures a second relay layer 2 identifier for the second sidelink, that is, does not perform multiplexing of the first sidelink.

In an embodiment of this application, after step 404, FIG. 6 is a flowchart 6 of a multiplexing method for a sidelink according to an embodiment of this application, including:
step 602. The relay device transmits the first communication acceptance information to the first communication device.

The first communication acceptance information uses or carries the first relay layer 2 identifier. That is, the first relay layer 2 identifier is used as the data frame or the header of the data frame of the first communication acceptance information; and the first communication acceptance information further includes the multiplexing acceptance information.

In this embodiment, if the second communication device accepts link multiplexing, then the second communication device replies the first communication acceptance information including the multiplexing instruction to the relay device. After receiving the relay communication acceptance information fed back by the second communication device, the relay device performs a multiplexing operation of the first sidelink, and feeds back the first communication acceptance information to the first communication device, so that the first communication device learns a multiplexing state and parameter of the first sidelink in time, and completes connection establishment of the second sidelink.

In an embodiment of this application, after step 104, FIG. 7 is a flowchart 7 of a multiplexing method for a sidelink according to an embodiment of this application, including:
step 702. After receiving first communication information transmitted by the second communication device, the relay device determines the user information in the first communication information; and
step 704. The relay device transmits the first communication information to the first communication device corresponding to the user information.

In this embodiment, after the first communication device performs multiplexing of the established first sidelink, a plurality of first communication devices establish a connection with the second communication device through the same sidelink. When the second communication device transmits data to different first communication devices (source LTE, source user equipment), the second communication device needs to transmit first communication information carrying user information of the first communication device. After receiving first communication information transmitted by the second communication device, the relay device may determine a first communication device associated with the transmitted data or signaling, and transmit the first communication information to the first communication device corresponding to the user information. In this way, configuration negotiation between the relay device and the second communication device configured to perform lower layer (Lower layer) multiplexing is performed, so as to avoid confusion in information transmission and improve communication reliability and security.

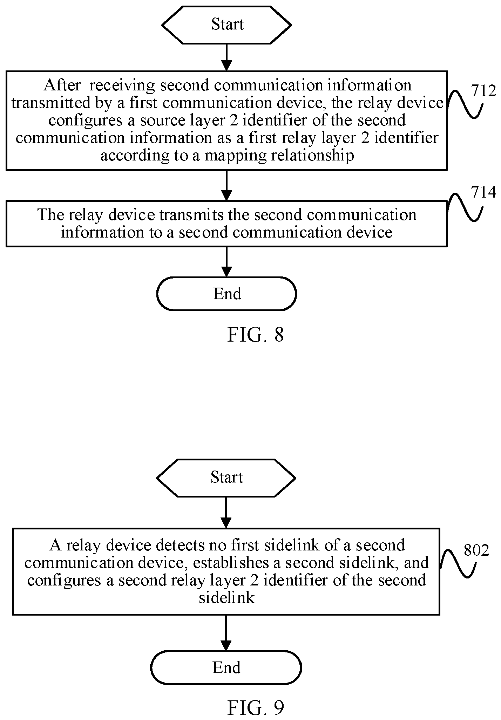

In an embodiment of this application, after step 104, FIG. 8 is a flowchart 8 of a multiplexing method for a sidelink according to an embodiment of this application, including:
step 712. After receiving second communication information transmitted by the first communication device, the relay device configures a source layer 2 identifier of the second communication information as the first relay layer 2 identifier according to the mapping relationship; and
step 714. The relay device transmits the second communication information to the second communication device.

In this embodiment, after the first communication device performs multiplexing of the established first sidelink, a plurality of first communication devices establish a connection with the second communication device through the same sidelink. When the first communication device (source LTE, source user equipment) transmits data or signaling to different second communication devices, the relay device configures a source layer 2 identifier of the forwarded second communication information as the first relay layer 2 identifier, and transmits the second communication information to the second communication device, so as to transmit data or signaling to the second communication device through the link between the second communication device and the relay device in the first sidelink. In this way, confusion in information transmission is avoided, and communication reliability and security are improved.

In an embodiment of this application, FIG. 9 is a flowchart 9 of a multiplexing method for a sidelink according to an embodiment of this application, including:
step 802. The relay device detects no first sidelink of the second communication device, establishes the second sidelink, and configures a second relay layer 2 identifier of the second sidelink.

In this embodiment, when the relay device retrieves the currently established sidelink and there is no second communication device indicated by the first communication request, that is, link multiplexing cannot be performed, the second communication link between the first communication device and the second communication device is directly established.

It is to be noted that before establishing the second communication link, the relay device first forwards the first communication request of the first communication device to the second communication device, to query whether the second communication device accepts the first communication device to establish a second sidelink with the second communication device through the relay device. After the relay device receives the communication acceptance instruction transmitted by the second communication device, the relay device establishes the second communication link between the first communication device and the second communication device, and configures a second relay layer 2 identifier for the second communication link, thereby improving the security of the communication system.

Specifically, for example, FIG. 13 is a schematic diagram of an operation among a relay device, a first communication device, and a second communication device in a wireless network according to an embodiment of this application. The embodiments of this application are specifically described through FIG. 13. The first communication device includes UE-1 and UE-2. The UE-1 has established a sidelink link#1 through the relay UE and the target UE, a link between the UE1 and the relay UE is a link#1a, and a link between the relay UE and the target UE is a link#1b.

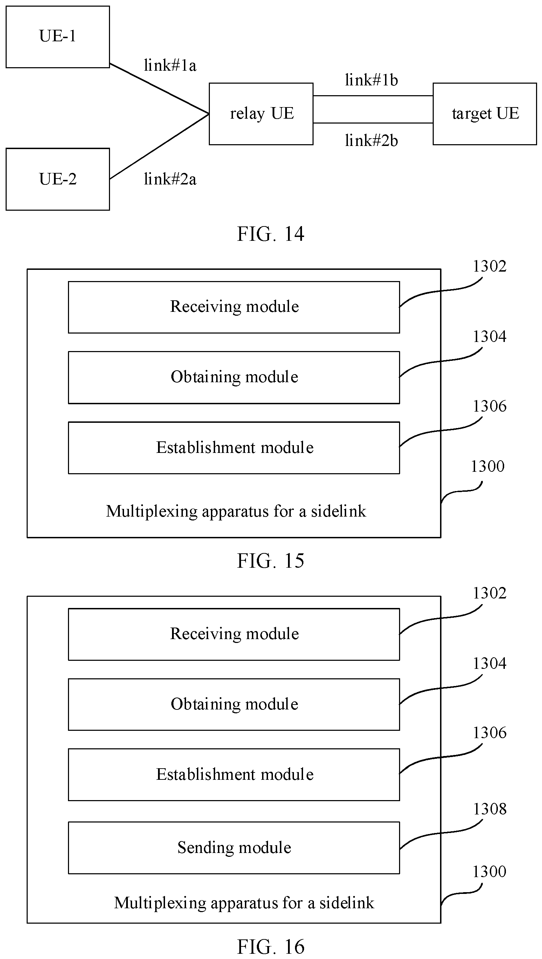

Specific implementation steps are as follows:
Step 1. Direct link establishment request:
   the UE-2 transmits a direct establishment request to the relay UE to establish a sidelink of the UE-2 ↔ relay UE ↔ target UE, where the direct establishment request message may carry user information (target user info) of the target UE.
Step 2. Negotiate a multiplexing link:
   the relay UE retrieves whether there is target UE indicated in step 1 in the currently established sidelink, and if yes, the relay LTE transmits multiplexing negotiation information to the target UE. The multiplexing negotiation message includes information such as user info of the LTE-2, QoS info, a service type, or a logical channel identifier (LCID). For example, the multiplexing negotiation message may be a link modification request message (link modification request message), used for requesting whether the target UE performs link multiplexing.
Step 3a. Accept multiplexing negotiation:
   if the target UE accepts link multiplexing, the target UE replies an acceptance message to the relay UE.
Step 4a. Sidelink multiplexing:
   after determining that the sidelink multiplexing is performed, as shown in FIG. 11, the relay UE uses the relay L2 ID of the link#1 as the relay L2 ID of the link#2, that is, the relay L2 ID of the sidelink configured with the UE-2 ↔ relay UE ↔ target UE is the same as the relay L2 ID of the link# 1; or
   as shown in FIG. 12, the relay UE allocates a new relay L2 ID to the sidelink of the UE-2 ↔ relay UE target UE ↔, the relay UE allocates a new relay L2 ID', and the relay UE establishes a mapping relationship between the relay L2 ID' and the relay L2 ID. That is, according to the mapping relationship, the relay LTE may multiplex the signaling or data of different source UEs (the UE-1 and the UE-2) to the link#1b.
Step 5a. Accept direct link establishment:
   the relay UE transmits a direct link acceptance message to the UE-2. The direct link acceptance message uses the multiplexed relay L2 ID of the link#1 as a header, or the direct link acceptance message carries the multiplexed relay L2 ID of the link#1.
Step 6a. Perform lower layer configuration:
   for the multiplexing link, the relay LTE and the target LTE perform configuration negotiation of lower layer (Lower layer) multiplexing, so that when the target UE transmits data to different source UEs (the UE-1 and the UE-2), an upper layer of the target UE indicates which source UE the data or signaling transmitted by the lower layer is associated with.
Step 3b. Reject multiplexing negotiation:
   if the target UE rejects link multiplexing, the target UE replies a rejection message to the relay UE.
Step 4b. Direct link establishment request:
   after receiving the rejection message, the relay UE no longer performs a multiplexing principle. As shown in FIG. 14, the relay UE transmits a direct link establishment request message to the target UE, to establish an independent sidelink of the UE-2 ↔ relay UE ↔ target UE.

In an embodiment of this application, FIG. 15 is a structural block diagram 1 of a multiplexing apparatus for a sidelink according to an embodiment of this application. The multiplexing apparatus 1300 for the sidelink includes: a receiving module 1302, where the receiving module 1302 is configured to receive a first communication request for communicating with a second communication device from a first communication device; an obtaining module 1304, where the obtaining module 1304 is configured to obtain a first relay layer 2 identifier of an established first sidelink of the second communication device; and an establishment module 1306, where the establishment module 1306 is configured to establish a second sidelink between the first communication device and the second communication device according to the first relay layer 2 identifier.

Optionally, the establishment module 1306 is specifically configured to: establish the second sidelink; and configure a second relay layer 2 identifier of the second sidelink as the first relay layer 2 identifier, to perform link multiplexing of the first sidelink.

Optionally, the establishment module 1306 is specifically configured to: establish the second sidelink, and configure a second relay layer 2 identifier of the second sidelink; and establish a mapping relationship between the second relay layer 2 identifier and the first relay layer 2 identifier, to perform link multiplexing of the first sidelink according to the mapping relationship.

Optionally, FIG. 16 is a structural block diagram 2 of a multiplexing apparatus for a sidelink according to an embodiment of this application. The multiplexing apparatus 1300 for the sidelink further includes: a transmitting module 1308, where the transmitting module 1308 is configured to transmit a multiplexing request carrying multiplexing negotiation information of the sidelink to the second communication device, where the multiplexing negotiation information uses or carries the first relay layer 2 identifier; and the multiplexing request includes any one of the following: the first communication request, a link modification request, and PC5 signaling.

Optionally, the multiplexing negotiation information includes at least one of the following: user information of the first communication device, user information of the relay device, user information of the second communication device, quality of service information, a service type, and a logical channel identifier.

Optionally, the receiving module 1302 is further configured to receive a multiplexing instruction carrying multiplexing acceptance information or multiplexing rejection information fed back by the second communication device.

Optionally, the receiving module 1302 is further configured to receive a multiplexing instruction or a relay communication instruction fed back by the second communication device, where the multiplexing instruction carries the multiplexing acceptance information or the multiplexing rejection information, and the relay communication instruction carries second communication acceptance information or the communication rejection information.

Optionally, the transmitting module 1308 is further configured to transmit the first communication acceptance information or the second communication acceptance information to the first communication device, where the first communication acceptance information uses or carries the first relay layer 2 identifier; and the first communication acceptance information further includes the multiplexing acceptance information.

Optionally, the receiving module 1302 is further configured to receive first communication information transmitted by the second communication device; the obtaining module 1304 is further configured to determine user information in the first communication information; and the transmitting module 1308 is further configured to transmit the first communication information to the first communication device corresponding to the user information.

The receiving module 1302 is further configured to receive second communication information transmitted by the first communication device; the establishment module 1306 is further configured to configure a source layer 2 identifier of the second communication information as the first relay layer 2 identifier according to the mapping relationship; and the transmitting module 1308 is further configured to transmit the second communication information to the second communication device.

In this embodiment, steps of performing the multiplexing method for a sidelink in any one of the embodiments when each module of the multiplexing apparatus 1300 for the sidelink performs respective functions. Therefore, the multiplexing apparatus for a sidelink also simultaneously includes all the beneficial effects of the multiplexing method for a sidelink in any one of the embodiments, which will not be repeated herein.

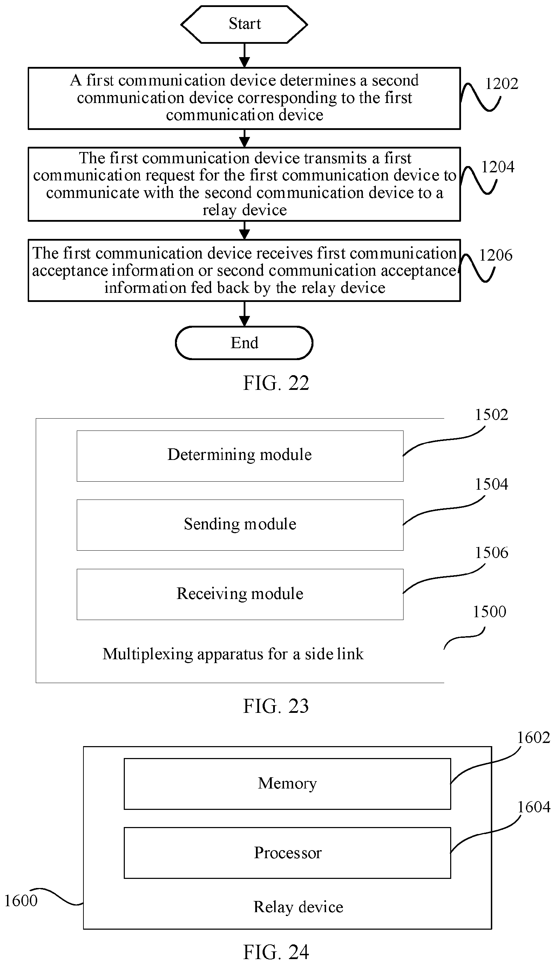

In an embodiment of this application, as shown in FIG. 24, a relay device 1600 is provided, including a processor 1604, a memory 1602, and a program or an instruction stored in the memory 1602 and executable on the processor 1604, where when the program or the instruction is executed by the processor 1604, steps of the multiplexing method for a sidelink provided in any one of the embodiments are implemented. Therefore, the relay device 1600 includes all beneficial effects of the multiplexing method for a sidelink provided in any one of the embodiments, which will not be repeated herein.

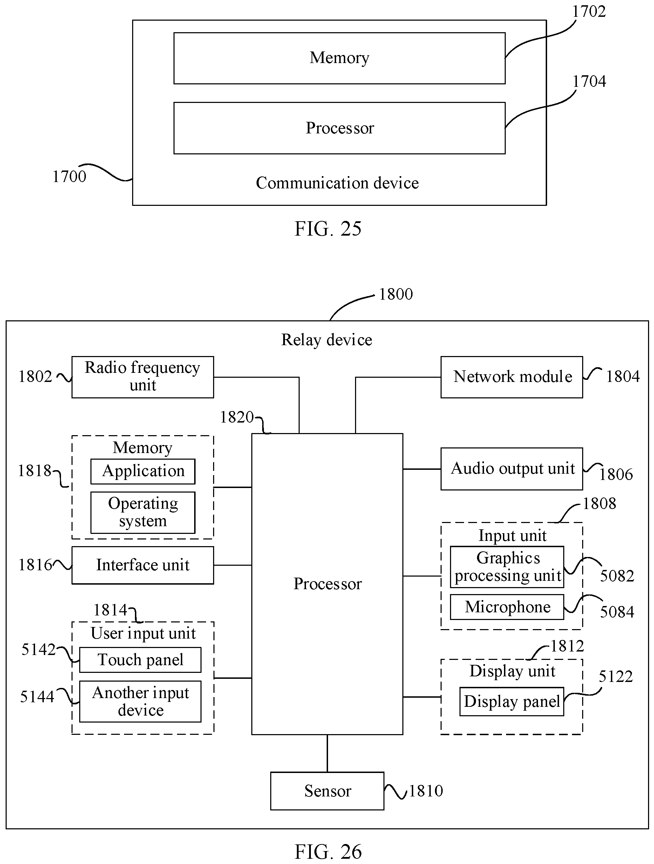

FIG. 26 is a schematic diagram of a hardware structure of a relay device 1800 according to an embodiment of this application. The relay device 1800 includes, but is not limited to, components such as a radio frequency unit 1802, a network module 1804, an audio output unit 1806, an input unit 1808, a sensor 1810, a display unit 1812, a user input unit 1814, an interface unit 1816, a memory 1818, and a processor 1820.

A person skilled in the art may understand that the relay device 1800 may further include the power supply (such as a battery) for supplying power to the components. The power supply may be logically connected to the processor 1820 by a power management system, thereby implementing functions such as charging, discharging, and power consumption management by using the power management system. A structure of a relay device shown in FIG. 26 does not constitute a limitation to the relay device, and the relay device may include more or fewer components than those shown in the figure, or some components may be combined, or a different component deployment may be used. In this embodiment of this application, the relay device includes, but is not limited to, a mobile terminal, a tablet computer, a notebook computer, a palmtop computer, an in-vehicle electronic device, a wearable device, a pedometer, and the like.

The radio frequency unit 1802 is configured to receive a first communication request for the first communication device to communicate with the second communication device, and the processor 1820 is configured to obtain a first relay layer 2 identifier of the established first sidelink of the second communication device; and establish a second sidelink between the first communication device and the second communication device according to the first relay layer 2 identifier.

Further, the processor 1820 is specifically configured to establish the second sidelink; and configure the second relay layer 2 identifier of the second sidelink as the first relay layer 2 identifier, to perform link multiplexing of the first sidelink, or configure the second relay layer 2 identifier of the second sidelink, and establish a mapping relationship between the second relay layer 2 identifier and the first relay layer 2 identifier, to perform link multiplexing of the first sidelink according to the mapping relationship.

Further, the radio frequency unit 1802 is further configured to transmit a multiplexing request carrying multiplexing negotiation information of the sidelink to the second communication device, and receive a multiplexing instruction carrying multiplexing acceptance information or multiplexing rejection information fed back by the second communication device.

The processor 1820 is further configured to receive a multiplexing instruction carrying multiplexing acceptance information fed back by the second communication device, and establish the second sidelink according to the first relay layer 2 identifier.

Further, the radio frequency unit 1802 is further configured to transmit a second communication request to the second communication device, receive a relay communication instruction carrying second communication acceptance information fed back by the second communication device, and transmit the second communication acceptance information to the first communication device; and
the processor 1820 is further configured to receive a relay communication instruction carrying second communication acceptance information fed back by the second communication device, establish the second sidelink, and configure a second relay layer 2 identifier of the second sidelink.

Further, the radio frequency unit 1802 is further configured to transmit the first communication acceptance information to the first communication device, where the first communication acceptance information uses or carries the first relay layer 2 identifier; and the first communication acceptance information further includes the multiplexing acceptance information.

Further, the radio frequency unit 1802 is further configured to receive first communication information transmitted by the second communication device, and transmit the first communication information to the first communication device corresponding to the user information; and the processor 1820 is further configured to determine user information in the first communication information.

The radio frequency unit 1802 is further configured to receive second communication information transmitted by the first communication device; and transmit the second communication information to the second communication device; and the processor 1820 is further configured to configure a source layer 2 identifier of the second communication information as the first relay layer 2 identifier according to the mapping relationship.

It should be understood that, in this embodiment of this application, the radio frequency unit 1802 may be configured to receive and transmit information or receive and transmit signals during a call, specifically, receive downlink data from a base station or transmit uplink data to a base station. The radio frequency unit 1802 includes, but is not limited to, an antenna, at least one amplifier, a transceiver, a coupler, a low noise amplifier, a duplexer, and the like.

A network module 1804 provides the user with wireless broadband Internet access, such as helping the user to send and receive emails, browse web pages, and access streaming media.

The audio output unit 1806 may convert audio data received by the radio frequency unit 1802 or the network module 1804 or stored on the memory 1818 into audio signals and output the audio signals as sounds. In addition, the audio output unit 1806 may further provide an audio output that is related to a particular function executed by the relay device 1800 (for example, a call signal receiving sound or a message receiving sound). The audio output unit 1806 includes a speaker, a buzzer, a receiver, and the like.

An input unit 1808 is configured to receive an audio signal or a video signal. The input unit 1808 may include a graphics processing unit (GPU) 5082 and a microphone 5084. The GPU 5082 processes image data of a static picture or a video obtained by an image capturing device (for example, a camera) in a video capturing mode or an image capturing mode. The processed image frame may be displayed on the display unit 1812, or stored on the memory 1818 (or another storage medium), or transmitted through the radio frequency unit 1802 or the network module 1804. The microphone 5084 may receive sound and process the sound into audio data. The processed audio data may be transferred, in a phone talk mode, to a format that may be sent to a mobile communication base station via the radio frequency unit 1802 to output.

The relay device 1800 further includes at least one sensor 1810, such as a fingerprint sensor, a pressure sensor, an iris sensor, a molecular sensor, a gyroscope, a barometer, a hygrometer, a thermometer, an infrared sensor, a light sensor, a motion sensor, or the like.

The display unit 1812 may be configured to display information input by the user or information provided for the user. The display unit 1812 may include a display panel 5122, and the display panel 5122 may be configured by using a liquid crystal display, an organic light-emitting diode, or the like.

A user input unit 1814 may be configured to: receive input numeral or character information, and generate a key signal input related to a user setting and function control of the relay device. Specifically, the user input unit 1814 includes a touch panel 5142 and another input device 5144. The touch panel 5142 is also referred to as a touch screen, which may collect a touch operation of a user on or near the touch panel. The touch panel 5142 may include two parts: a touch detection apparatus and a touch controller. The touch detection apparatus detects a touch orientation of the user, detects a signal brought through the touch operation, and transmits the signal to the touch controller. The touch controller receives the touch information from the touch detection apparatus, converts the touch information into touch point coordinates, and transmits the touch point coordinates to the processor 1820. Moreover, the touch controller may receive and execute a command transmitted from the processor 1820. The another input device 5144 may include, but not limited to, a physical keyboard, a functional key (such as a volume control key or a switch key), a track ball, a mouse, and a joystick, which are not described herein in detail.

Further, the touch panel 5142 may cover the display panel 5122. After detecting a touch operation on or near the touch panel 5142, the touch panel transfers the touch operation to the processor 1820, to determine a type of a touch event. Then, the processor 1820 provides a corresponding visual output on the display panel 5122 according to the type of the touch event. The touch panel 5142 and the display panel 5122 may be used as two independent components, or may be integrated into one component.

The interface unit 1816 is an interface for connecting an external apparatus to the relay device 1800. For example, the external apparatus may include a wired or wireless headset port, an external power supply (or a battery charger) port, a wired or wireless data port, a storage card port, a port used to connect an apparatus having an identification module, an audio input/output (I/O) port, a video I/O port, an earphone port, and the like. The interface unit 1816 may be configured to receive an input (such as data information or electric power) from an external apparatus and transmit the received input to one or more elements in the relay device 1800 or may be configured to transmit data between the relay device 1800 and an external apparatus.

The memory 1818 may be configured to store a software program and various data. The memory 1818 may mainly include a program storage area and a data storage area. The program storage area may store an operating system, an application program required by at least one function (such as a sound playback function and an image display function), and the like. The data storage area may store data (such as audio data and an address book) created according to the use of the mobile terminal, and the like. In addition, the memory 1818 may include a high-speed random access memory, and may also include a nonvolatile memory, for example, at least one magnetic disk storage device, a flash memory, or another volatile solid-state storage device.

By running or executing the software program and/or module stored in the memory 1818, and invoking data stored in the memory 1818, the processor 1820 performs various functions and data processing of the relay device 1800, thereby performing overall monitoring on the relay device 1800. The processor 1820 may include one or more processing units. The processor 1820 may integrate an application processor and a modem. The application processor mainly processes an operating system, a user interface, an application, and the like. The modem mainly processes multiplexing of the sidelink.

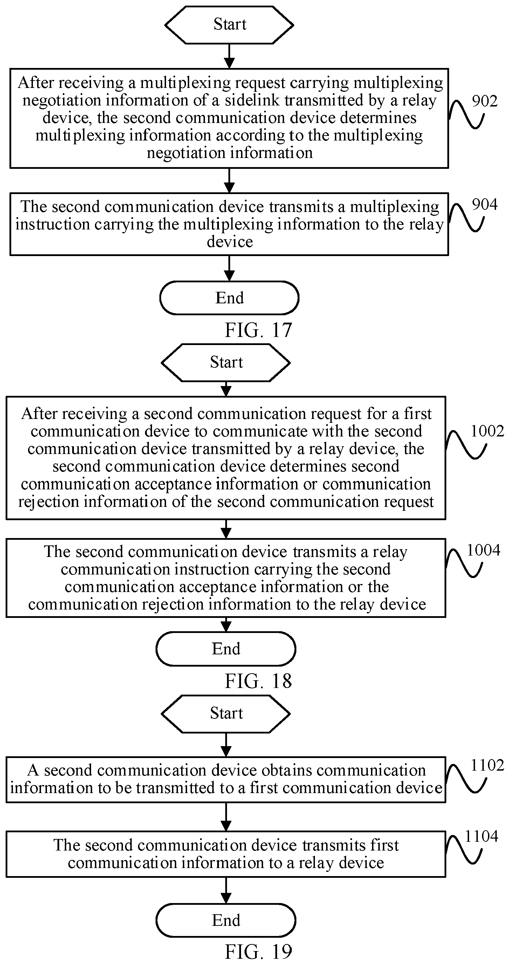

In an embodiment of this application, FIG. 17 is a flowchart 10 of a multiplexing method for a sidelink according to an embodiment of this application, including:
step 902. After receiving a multiplexing request carrying multiplexing negotiation information of a sidelink transmitted by a relay device, a second communication device determines multiplexing information according to the multiplexing negotiation information; and
the multiplexing information includes multiplexing acceptance information or multiplexing rejection information; and the multiplexing instruction includes any one of the following: a relay communication instruction, a link modification instruction, and PC5 signaling.
step 904. The second communication device transmits a multiplexing instruction carrying the multiplexing information to the relay device.

In this embodiment, after the second communication device receives the multiplexing request carrying the multiplexing negotiation information of the sidelink transmitted by the relay device, the second communication device determines the multiplexing information of the multiplexing negotiation information in response to a second input by a user or according to a multiplexing rule preset by a user. The second communication device transmits a multiplexing instruction carrying multiplexing information to the relay device, so as to feed back to the relay device whether to perform multiplexing of the first sidelink.

In an embodiment of this application, the multiplexing instruction includes confirming the multiplexing instruction; and FIG. 18 is a flowchart 11 of a multiplexing method for a sidelink according to an embodiment of this application, including:
step 1002. After receiving the second communication request from the first communication device to the second communication device transmitted by the relay device, the second communication device determines second communication acceptance information or communication rejection information of the second communication request; and
step 1004. The second communication device transmits a relay communication instruction carrying the second communication acceptance information or the communication rejection information to the relay device.

In this embodiment, after the second communication device receives the first communication request for the first communication device to communicate with the second communication device transmitted by the relay device, the second communication device determines second communication acceptance information or communication rejection information of the first communication request in response to a third input by the user or according to the communication rule preset by the user. The second communication device transmits a relay communication instruction carrying second communication acceptance information or communication rejection information to the relay device, so as to feed back to the relay device whether to accept the first communication request of the first communication device.

In an embodiment of this application, the multiplexing instruction includes confirming the multiplexing instruction; and FIG. 19 is a flowchart 12 of a multiplexing method for a sidelink according to an embodiment of this application, including:
step 1102. The second communication device obtains first communication information to be transmitted to a first communication device; and
step 1104. The second communication device transmits the first communication information to the relay device.

The first communication information includes user information of the first communication device.

In this embodiment, after the second communication device confirms multiplexing of the established first sidelink, a plurality of first communication devices establish communication with the second communication device through the first sidelink. When the second communication device transmits data to the first communication device (source UE, source user equipment), the second communication device needs to transmit first communication information carrying user information of the first communication device. After receiving first communication information transmitted by the second communication device, the relay device may determine a source communication device associated with the transmitted data or signaling, so that the relay device transmits the first communication information to the first communication device corresponding to the user information. In this way, configuration negotiation between the relay device and the second communication device configured to perform lower layer (Lower layer) multiplexing is performed, so as to avoid confusion in information transmission and improve communication reliability and security.

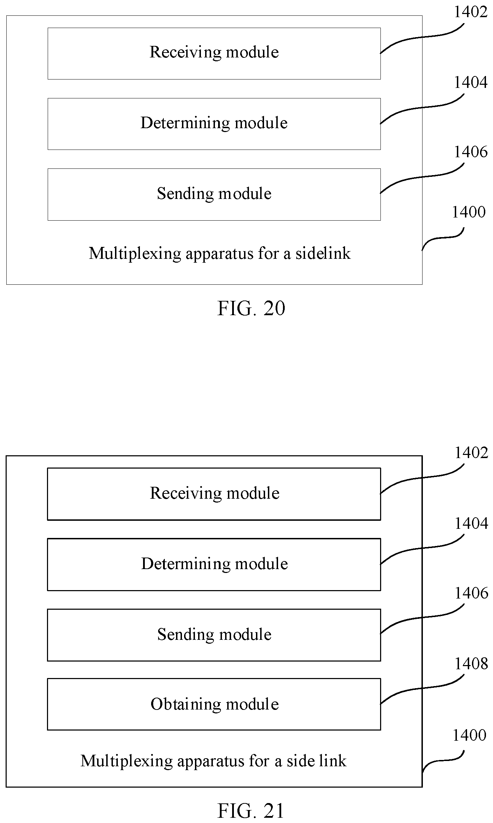

In an embodiment of this application, FIG. 20 is a structural block diagram 3 of a multiplexing apparatus for a sidelink according to an embodiment of this application. The multiplexing apparatus 1400 for the sidelink includes: a receiving module 1402, where the receiving module 1402 is configured to receive a multiplexing request carrying multiplexing negotiation information of a sidelink transmitted by the relay device; a determining module 1404, where the determining module 1404 is configured to determine multiplexing information according to the multiplexing negotiation information; and a transmitting module 1406, where the transmitting module 1406 is configured to transmit a multiplexing instruction carrying the multiplexing information to the relay device.

Optionally, the multiplexing information includes multiplexing acceptance information or multiplexing rejection information; and the multiplexing instruction includes any one of the following: a relay communication instruction, a link modification instruction, and PC5 signaling.

Optionally, the multiplexing negotiation information includes at least one of the following: user information of the first communication device, user information of the second communication device, user information of the relay device, quality of service information, a service type, and a logical channel identifier.

Optionally, the receiving module 1402 is further configured to receive a second communication request from the first communication device to the second communication device transmitted by the relay device; and the determining module 1404 is further configured to determine acceptance information or communication rejection information of the second communication request.

Optionally, the transmitting module 1406 is further configured to transmit a relay communication instruction carrying the second communication acceptance information or the communication rejection information to the relay device.

Optionally, the transmitting module 1406 is further configured to transmit first communication information to be transmitted to a first communication device to the relay device.

Optionally, FIG. 21 is a structural block diagram 4 of a multiplexing apparatus for a sidelink according to an embodiment of this application. The multiplexing apparatus 1400 for the sidelink further includes: an obtaining module 1408, where the obtaining module 1408 is configured to obtain first communication information to be transmitted to the first communication device. The transmitting module 1406 is further configured to transmit the first communication information to the relay device, where the first communication information includes user information of the first communication device.

In this embodiment, steps of performing the multiplexing method for a sidelink in any one of the embodiments when each module of the multiplexing apparatus 1400 for the sidelink performs respective functions. Therefore, the multiplexing apparatus for a sidelink also simultaneously includes all the beneficial effects of the multiplexing method for a sidelink in any one of the embodiments, which will not be repeated herein.

In an embodiment of this application, FIG. 22 is a flowchart 13 of a multiplexing method for a sidelink according to an embodiment of this application, including:
step 1202. A first communication device determines a second communication device corresponding to the first communication device;
step 1204. The first communication device transmits a first communication request for the first communication device to communicate with the second communication device to a relay device; and
in this embodiment, the first communication device determines a second communication device that needs to establish communication, and the first communication device transmits a first communication request for the first communication device to communicate with the second communication device to the relay device, so that the relay device establishes a sidelink, so as to implement a communication connection between the first communication device and the second communication device; and
step 1206. The first communication device receives first communication acceptance information or second communication acceptance information fed back by the relay device.

In this embodiment, if there is a first sidelink of the second communication device in the established sidelink, and the first communication device receives the first communication acceptance information, signaling or data of different first communication devices may be multiplexed to the first sidelink. After receiving the second communication acceptance information, the first communication device may communicate with the second communication device through the relay device.

Specifically, after the receiving, by the first communication device, first communication acceptance information or second communication acceptance information fed back by the relay device, the method further includes: obtaining, by the first communication device, the second communication information to be transmitted to the second communication device; and transmitting, by the first communication device, the second communication information to the relay device.

In this embodiment, the first communication device may transmit data or signaling to the second communication device through the relay device, thereby improving reduction of a signal-to-noise ratio and degradation of quality of service caused by channel fading and the device being too far away, and reducing a limitation on a communication range.

In an embodiment of this application, FIG. 23 is a structural block diagram 5 of a multiplexing apparatus for a sidelink according to an embodiment of this application. The multiplexing apparatus 1500 for the sidelink further includes: a determining module 1502, where the determining module 1502 is configured to determine a second communication device corresponding to a first communication device; a transmitting module 1504, where the transmitting module 1504 is configured to transmit a first communication request for the first communication device to communicate with the second communication device to a relay device; and a receiving module 1506, where the receiving module 1506 is configured to receive first communication acceptance information or second communication acceptance information fed back by the relay device.

In this embodiment, steps of performing the multiplexing method for a sidelink in any one of the embodiments when each module of the multiplexing apparatus 1500 for the sidelink performs respective functions. Therefore, the multiplexing apparatus for a sidelink also simultaneously includes all the beneficial effects of the multiplexing method for a sidelink in any one of the embodiments, which will not be repeated herein.

In an embodiment of this application, as shown in FIG. 25, a communication device 1700 is provided, including: a memory 1702, on which a computer program is stored; and a processor 1704, configured to execute a computer program to implement steps of the multiplexing method for a sidelink provided in any one of the embodiments. Therefore, the communication device 1700 includes all beneficial effects of the multiplexing method for a sidelink provided in any one of the embodiments, which will not be repeated herein.

The communication device in the embodiments of this application may be an apparatus, and may also be a component in a terminal, an integrated circuit, or a chip. The apparatus may be a mobile electronic device, or may be a non-mobile electronic device. For example, the mobile electronic device may be a mobile phone, a tablet computer, a notebook computer, a handheld computer, a vehicle-mounted electronic device, a wearable device, an ultra-mobile personal computer (ultra-mobile personal computer, UMPC), a netbook, a personal digital assistant (personal digital assistant, PDA), or the like. The non-mobile terminal may be a server, a network attached storage (network attached storage, NAS), a personal computer (personal computer, PC), a television (television, TV), a cash machine, a self-service machine, or the like, which is not specifically limited in the embodiments of this application.

The communication device in the embodiments of this application may be an apparatus having an operating system. The operating system may be an Android (Android) operating system, may be an ios operating system, and may further be another possible operating system, which is not specifically limited in this embodiment of this application.

In an embodiment of this application, a readable storage medium is provided, storing a program or an instruction, where when the program or the instruction is executed by a processor, steps of the multiplexing method for a sidelink provided in any one of the embodiments are implemented.

In this embodiment, the readable storage medium may implement various processes of the multiplexing method for a sidelink provided in the embodiments of this application, and may implement the same technical effect, which will not be repeated herein to avoid repetition.

The processor is a processor in the communication device in the foregoing embodiment. The readable storage medium includes a computer-readable storage medium, for example, a read-only memory (Read-Only Memory, ROM), a random access memory (Random Access Memory, RAM), a magnetic disk, an optical disc or the like. A readable storage media may be either volatile or non-volatile. In addition, the readable storage medium in the embodiments of this application may be non-transitory.

The embodiments of this application further provide a chip, including a processor and a communication interface, where the communication interface is coupled to the processor. The processor is configured to run a program or an instruction, to implement various processes of embodiments of the multiplexing method for a sidelink, and may implement the same technical effect, which will not be described in detail herein again to avoid repetition.

It should be understood that the chip mentioned in the embodiments of this application may further be referred to as a system-level chip, a system chip, a chip system, a system on chip, or the like.

It is to be noted that the term "include", "comprise" or any other variation thereof in this specification intends to cover a non-exclusive inclusion, which specifies the presence of stated processes, methods, objects, or apparatuses, but does not preclude the presence or addition of one or more other processes, methods, objects, or apparatuses. The term "a plurality of" means two or more, unless otherwise definitely limited. The terms "connected" and "connection" should be understood in a broad sense. For example, "connection" may be a fixing connection, a detachable connection, or an integral connection; and "connected" may be a direct connection or an indirect connection by using an intermediary. The terms "first", "second", and the like are intended to distinguish between different objects but do not indicate a particular order of an object. A person of ordinary skill in the art may understand the specific meanings of the foregoing terms in this application according to specific situations.

Although the embodiments of this application have been described above with reference to the accompanying drawings, this application is not limited to the specific implementations described above, and the specific implementations described above are merely exemplary and not limitative. A person of ordinary skill in the art may make various variations under the teaching of this application without departing from the spirit of this application and the protection scope of the claims, and such variations shall all fall within the protection scope of this application.

## Claims

1. A multiplexing method for a sidelink, comprising:
receiving, by a relay device, a first communication request for communicating with a second communication device from a first communication device, and obtaining a first relay layer 2 identifier of an established first sidelink of the second communication device; and
establishing, by the relay device, a second sidelink between the first communication device and the second communication device according to the first relay layer 2 identifier, so that a link between the relay device of the second sidelink and the second communication device multiplexes a link between the relay device of the first sidelink and the second communication device.

2. The multiplexing method for a sidelink according to claim 1, wherein the establishing, by the relay device, a second sidelink between the first communication device and the second communication device according to the first relay layer 2 identifier comprises:
establishing, by the relay device, the second sidelink; and
configuring, by the relay device, a second relay layer 2 identifier of the second sidelink as the first relay layer 2 identifier, to perform link multiplexing of the first sidelink.

3. The multiplexing method for a sidelink according to claim 1, wherein the establishing, by the relay device, a second sidelink between the first communication device and the second communication device according to the first relay layer 2 identifier comprises:
establishing, by the relay device, the second sidelink, and configuring a second relay layer 2 identifier of the second sidelink; and
establishing, by the relay device, a mapping relationship between the second relay layer 2 identifier and the first relay layer 2 identifier, to perform link multiplexing of the first sidelink according to the mapping relationship.

4. The multiplexing method for a sidelink according to claim 1, wherein the establishing, by the relay device, a second sidelink between the first communication device and the second communication device according to the first relay layer 2 identifier comprises:
transmitting, by the relay device, a multiplexing request carrying multiplexing negotiation information of the sidelink to the second communication device; and
after receiving a multiplexing instruction carrying multiplexing acceptance information fed back by the second communication device, establishing, by the relay device, the second sidelink according to the first relay layer 2 identifier, wherein
the multiplexing negotiation information uses or carries the first relay layer 2 identifier; and the multiplexing request comprises any one of following: the first communication request, a link modification request, and PC5 signaling.

5. The multiplexing method for a sidelink according to claim 4, wherein after the relay device receives the multiplexing instruction carrying multiplexing acceptance information fed back by the second communication device, the method further comprises:
transmitting, by the relay device, first communication acceptance information to the first communication device, to complete connection establishment of the second sidelink, wherein
the first communication acceptance information uses or carries the first relay layer 2 identifier; and the first communication acceptance information further comprises the multiplexing acceptance information.

6. The multiplexing method for a sidelink according to claim 4, further comprising:
after receiving a multiplexing instruction carrying multiplexing rejection information fed back by the second communication device, transmitting, by the relay device, a second communication request to the second communication device;
after receiving a relay communication instruction carrying second communication acceptance information fed back by the second communication device, establishing, by the relay device, the second sidelink, and configuring, by the relay device, a second relay layer 2 identifier of the second sidelink; and
transmitting, by the relay device, the second communication acceptance information to the first communication device.

7. The multiplexing method for a sidelink according to any one of claims 4 to 6, wherein the multiplexing negotiation information comprises at least one of following: user information of the first communication device, user information of the relay device, user information of the second communication device, quality of service information, a service type, and a logical channel identifier.

8. The multiplexing method for a sidelink according to any one of claims 1 to 6, wherein after the establishing, by the relay device, a second sidelink between the first communication device and the second communication device according to the first relay layer 2 identifier, the method further comprises:
after receiving first communication information transmitted by the second communication device, determining, by the relay device, user information in the first communication information; and
transmitting, by the relay device, the first communication information to the first communication device corresponding to the user information.

9. The multiplexing method for a sidelink according to claim 3, wherein further comprising:
after receiving second communication information transmitted by the first communication device, configuring, by the relay device, a source layer 2 identifier of the second communication information as the first relay layer 2 identifier according to the mapping relationship; and
transmitting, by the relay device, the second communication information to the second communication device.

10. The multiplexing method for a sidelink according to any one of claims 1 to 6, further comprising:
detecting, by the relay device, no first sidelink of the second communication device, establishing, by the relay device, the second sidelink, and configuring, by the relay device, a second data link layer identifier of the second sidelink.

11. A multiplexing method for a sidelink, comprising:
after receiving a multiplexing request carrying multiplexing negotiation information of a sidelink transmitted by a relay device, determining, by a second communication device, multiplexing information according to the multiplexing negotiation information; and
transmitting, by the second communication device, a multiplexing instruction carrying the multiplexing information to the relay device, wherein
the multiplexing information comprises multiplexing acceptance information or multiplexing rejection information; and the multiplexing instruction comprises any one of following: a relay communication instruction, a link modification instruction, and PC5 signaling.

12. The multiplexing method for a sidelink according to claim 11, further comprising:
after receiving a second communication request transmitted by the relay device, determining, by the second communication device, second communication acceptance information or communication rejection information of the second communication request; and
transmitting, by the second communication device, a relay communication instruction carrying the second communication acceptance information or the communication rejection information to the relay device.

13. The multiplexing method for a sidelink according to claim 11, further comprising:
obtaining, by the second communication device, first communication information to be transmitted to a first communication device; and
transmitting, by the second communication device, the first communication information to the relay device, wherein
the first communication information carries user information of the first communication device.

14. A multiplexing method for a sidelink, comprising:
determining, by a first communication device, a second communication device corresponding to the first communication device;
transmitting, by the first communication device, a first communication request for the first communication device to communicate with the second communication device to a relay device; and
receiving, by the first communication device, first communication acceptance information or second communication acceptance information fed back by the relay device, to complete connection establishment of a second sidelink between the first communication device and the second communication device.

15. The multiplexing method for a sidelink according to claim 14, further comprising:
obtaining, by the first communication device, second communication information to be transmitted to the second communication device; and
transmitting, by the first communication device, the second communication information to the relay device.

16. A multiplexing apparatus for a sidelink, applied to a relay device, and the apparatus comprising:
a receiving module, configured to receive a first communication request for communicating with a second communication device from a first communication device;
an obtaining module, configured to obtain a first relay layer 2 identifier of an established first sidelink of the second communication device; and
an establishment module, configured to establish a second sidelink between the first communication device and the second communication device according to the first relay layer 2 identifier, so that a link between the relay device of the second sidelink and the second communication device multiplexes a link between the relay device of the first sidelink and the second communication device.

17. The multiplexing apparatus for a sidelink according to claim 16, wherein
the establishment module is specifically configured to establish the second sidelink, and configure a second relay layer 2 identifier of the second sidelink as the first relay layer 2 identifier.

18. The multiplexing apparatus for a sidelink according to claim 16, wherein
the establishment module is specifically configured to establish the second sidelink, and configure a second relay layer 2 identifier of the second sidelink; and
establish a mapping relationship between the second relay layer 2 identifier and the first relay layer 2 identifier.

19. The multiplexing apparatus for a sidelink according to any one of claims 16 to 18, wherein
the receiving module is further configured to receive first communication information transmitted by the second communication device;
the obtaining module is further configured to determine user information in the first communication information; and
the multiplexing apparatus for a sidelink further comprises:
a transmitting module, configured to transmit the first communication information to the first communication device corresponding to the user information.

20. A multiplexing apparatus for a sidelink, applied to a second communication device, and the apparatus comprising:
a receiving module, configured to receive a multiplexing request carrying multiplexing negotiation information of a sidelink transmitted by a relay device;
a determining module, configured to determine multiplexing information according to the multiplexing negotiation information; and
a transmitting module, configured to transmit a multiplexing instruction carrying the multiplexing information to the relay device, wherein
the multiplexing information comprises multiplexing acceptance information or multiplexing rejection information; and the multiplexing instruction comprises any one of following: a relay communication instruction, a link modification instruction, and PC5 signaling.

21. The multiplexing apparatus for a sidelink according to claim 20, further comprising:
an obtaining module, configured to obtain first communication information to be transmitted to a first communication device; and
the transmitting module is further configured to transmit the first communication information to the relay device, wherein
the first communication information carries user information of the first communication device.

22. A multiplexing apparatus for a sidelink, applied to a first communication device, and the apparatus comprising:
a determining module, configured to determine a second communication device corresponding to the first communication device;
a transmitting module, configured to transmit a first communication request for the first communication device to communicate with the second communication device to a relay device; and
a receiving module, configured to receive first communication acceptance information or communication acceptance information fed back by the relay device, to complete connection establishment of a second sidelink between the first communication device and the second communication device.

23. A relay device, comprising a processor, a memory, and a program or an instruction stored in the memory and executable on the processor, wherein when the program or the instruction is executed by the processor, steps of the multiplexing method for a sidelink according to any one of claims 1 to 10 are implemented.

24. A communication device, comprising a processor, a memory, and a program or an instruction stored in the memory and executable on the processor, wherein when the program or the instruction is executed by the processor, steps of the multiplexing method for a sidelink according to any one of claims 11 to 15 are implemented.

25. A readable storage medium, storing a program or an instruction, wherein when the program or the instruction is executed by a processor, steps of the multiplexing method for a sidelink according to any one of claims 1 to 15 are implemented.

26. A chip, comprising a processor and a communication interface, wherein the communication interface is coupled to the processor, and the processor is configured to run a program or an instruction to implement steps of the multiplexing method for a sidelink according to any one of claims 1 to 15.

27. A computer program product, stored in a non-volatile storage medium, wherein the computer program product is executed by at least one processor to implement steps of the multiplexing method for a sidelink according to any one of claims 1 to 15.

28. An electronic device, comprising the electronic device, being configured to perform steps of the multiplexing method for a sidelink according to any one of claims 1 to 15.
